# EUROPEAN PATENT SPECIFICATION

(11) **EP 0 996 554 B1**
(45) Date of publication and mention of the grant of the patent: **02.01.2004**
(21) Application number: 98935678.7
(22) Date of filing: 16.07.1998
(51) Int. Cl.: B60N 2/12, B60N 2/30, B60N 2/36, B60N 2/00, B60N 2/06

(54) **REMOVABLE SEAT**
ABNEHMBARER SITZ
SIEGE AMOVIBLE

(30) Priority: 16.07.1997 US 52901 P
(43) Date of publication of application: 03.05.2000
(73) Proprietor: Johnson Controls Technology Company, Plymouth, Michigan 48170 (US)
(72) Inventor: OPFER, John, Canton, MI 48187 (US); DUNCAN, Terrence, Kentwood, MI 49512 (US); GRISWOLD, Leslie, Whitmore Lake, MI 48189 (US); ANTICUAR, David, G., West Bloomfield, MI 48322 (US); FIEROH, Lawrence, A., Troy, MI 48908 (US)
(74) Representative: Patentanwälte Dr. Solf & Zapf
(86) International application number: PCT/US1998/014644
(87) International publication number: WO 1999/003702

(56) References cited:
- GB-A- 1 054 377
- US-A- 4 354 791
- US-A- 5 636 884
- US-A- 5 711 505
- US-A- 5 741 046

## Description

### BACKGROUND OF THE INVENTION

### 1. Technical Field

This invention generally relates to a vehicle seating structure allowing the removal of a seat through an opening of a vehicle, comprising a track located in the vehicle in coordination with said opening, wherein said seat includes an interconnection member which is slidably engaged with said track, thereby allowing said seat to be displaced along said track and pass through said opening for removal.

### 2. Discussion

Seats which are removable from a vehicle are known in the industry within certain vehicle types. Particularly, removable seats have been incorporated in vans which are intended to serve a dual purpose, that of cargo carrying and that of passenger transport. While some advancements have been made to improve the ease with which the seats may be removed, the task is still often difficult and awkward. Typically, the person removing the seats must release a latch mechanism mounted to the seat which engages a striker bar connected to a recess in the vehicle floor. Once released, the seat is lifted from the recesses and is free from the vehicle at that point. The seat must then be lifted by the person removing the seat as they exit the vehicle. The lifting motion is often difficult because the person must bend to avoid hitting the roof of the vehicle as they lift the seat. Some manufacturers have reduced the difficulty of removing the seat by placing rollers on the bottom of the seat stantions, however, the seat must still be lifted out of the recesses and angled such that the wheels contact the floor of the vehicle while rolling them toward the opening.

The US-A-4 354 791 discloses a seating structure comprising a vehicle seat assembly. An additional seat element is provided for anchoring upon a seat cushion of the vehicle. For this purpose the cushion of the vehicle includes a rigid platform having strap means for anchoring the additional seat. The upper surface of the vehicle seat is provided with two track members. This construction allows only an easy transfer of an invalid person into and out the vehicle by means of the additional seat element for the invalid person.

The present invention is intended to provide a user friendly removable seat which minimizes the operator's difficulty during removal in case of cargo carrying.

### SUMMARY OF THE INVENTION

In accordance with the teachings of the present invention, the track is secured to a body of the vehicle in coordination with said opening on a surface of the vehicle, whereby the seat is an actual seat assembly of the vehicle. The track is generally perpendicular to and aligns with the door opening of the vehicle such that the operator is able to remove the seat while primarily standing on the exterior of the vehicle. In accordance with a preferred embodiment of the present invention, the seat can be folded to a more compact configuration than when in the normal use position. Once the seat is in the folded configuration it can pass through the door opening of the vehicle with relative ease.

Further developments in line with claim 1 are referred to in the dependent claims.

### BRIEF DESCRIPTION OF THE DRAWINGS

The various advantages of the present invention will become apparent to one skilled in the art upon reading the following specification and by reference to the drawings in which:
FIG. 1 is a perspective view of a removable seat made in accordance with the teachings of the present invention and shown in the normal use position;
FIG. 2 is a detailed sectional view taken along line 2-2 in FIG. 1;
FIG. 3 is a perspective view of the removable seat in a first folded position;
FIG. 4 is a perspective view of the removable seat in a vertically rotated position; and
FIG. 5 is a perspective view of the removable seats when removed through the door opening of a vehicle.

### DETAILED DESCRIPTION OF THE PREFERRED EMBODIMENT

The following description of the preferred embodiment is merely exemplary in nature and is in no way intended to limit the invention, or its application, or uses.

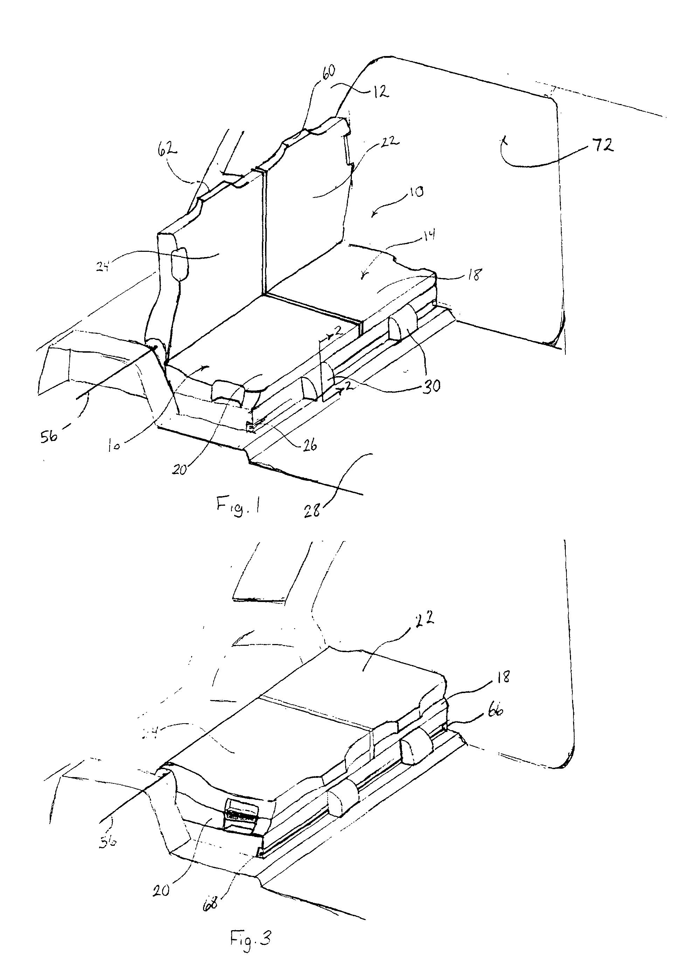

Referring to FIG. 1, seat assembly 10 is shown with a vehicle body 12. Seat assembly 10 is shown as a 60/40 split seat having a driver side seat portion 14 and a passenger side seat portion 16. Each seat portion, 14 and 16, includes a seat cushion 18 and 20, respectively, and seat backs 22 and 24, respectively. While the preferred embodiment of the present invention will be described as a 60/40 split bench seat, other seating arrangements such as a full width bench seat, separate and individual seating units (typically referred to as bucket seats), and seats having three or more sections are also specifically included within the scope of the present invention.

Portions 14 and 16 are shown in a normal use position wherein an occupant would normally be seated in the seat while in this configuration. A track 26 is provided in or on the floor pan 28 of the vehicle body 12. Track 26 in the preferred embodiment is shown to be mounted on, or provided in, a generally vertical portion of floor pan 28. Further, track 26 can be located on a generally horizontal portion of floor pan 28, or at some inclined angle between horizontal and vertical surfaces of floor pan 28.

Track 26 can be secured to floor pan 28 by a number of methods known in the industry. Such methods include, but are not limited to: screws; bolts; welding; bonding; and the like. Further, track 26 can be mounted or secured below the surface of floor pan 28 with a coordinated slot or groove provided to enable track 26 to properly interface with connecting pieces as described below.

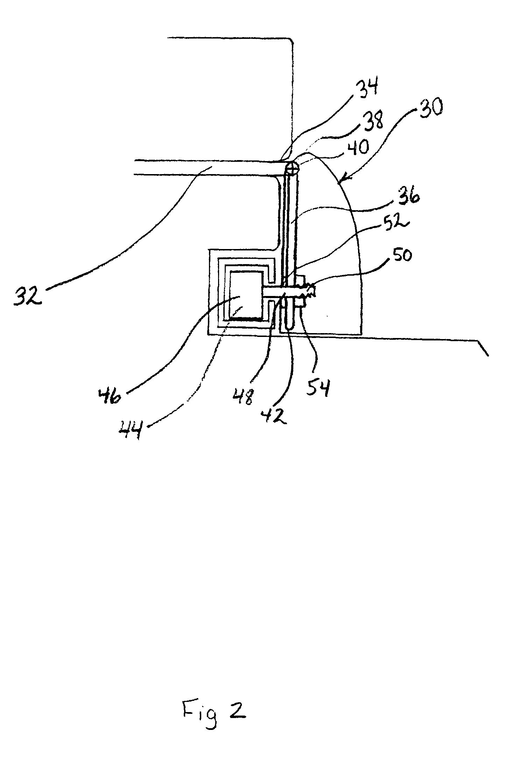

With additional reference to FIG. 2, an interconnecting assembly 30 is shown attached to seat cushion 20 and engaging track 26. Assembly 30 includes a first segment 32 connected to a forward lower edge 34 of seat cushion 20. First segment 32 is pivotally connected to a second segment 36 about hinge 38 having axis 40 running therethrough. A distal end 42 of second segment 36 provides attachment for track engagement member 44. Engagement member 44 in the preferred embodiment includes a roller 46 mounted for rotation about a shaft 48 having a threaded portion 50 thereon. A radially extending shoulder 52 is located on shaft 48 and acts in conjunction with retainer 54 to secure second segment 36 to the shaft. While track engagement member 44 in the preferred embodiment is as described, other engagement member structures can be used with equal result. Sliding block type members made of steel or plastic, particularly a self-lubricating type plastic, can be utilized in place of the above described engagement member as one non-limiting example. Further, engagement member structures using a plurality of rollers which are either oriented to coordinate with one another or are oriented to provide retention and reduce frictional resistance, can also be utilized. The track can also provide bearings to support and reduce friction when a sliding block member is used.

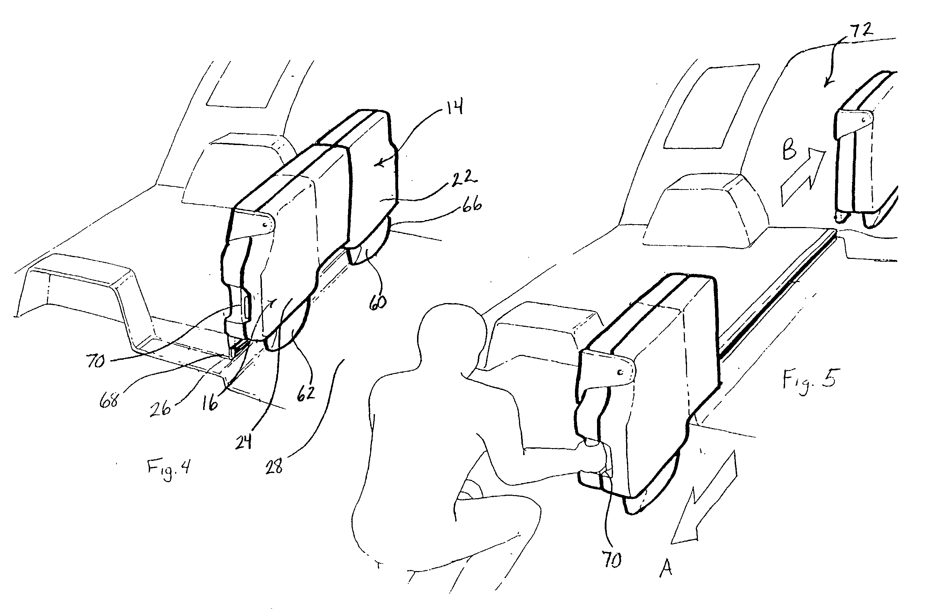

Referring to FIG. 3, seat backs 22 and 24 are shown in a first folded position in which seat backs 22 and 24 pivot about axis 56 and overlie seat cushions 18 and 20, respectively. Seat backs 22 and 24 are pivotally connected to seat cushions 18 and 20 about axis 56 and may include a recline mechanism (not shown) allowing the angle of the seat backs to be varied when in the normal use position. One of many lock devices known within the industry can be used to retain seat backs 22 and 24 in their upright position relative to seat cushions 18 and 20 and such a device can be incorporated in the recline mechanism as known in the industry.

With reference to FIG. 4, driver side seat portion 14 and passenger side seat portion 16 are shown rotated upwardly and forwardly about axis 40 (shown in FIG. 2) to a generally vertical position. As a result, the seat backs 22 and 24 are now inverted with the headrest 60 and 62 directed toward floor pan 28. Once seat portions 14 and 16 have been folded to the position shown in FIG. 4, seat portions 14 and 16 can be moved laterally along track 26 as shown by arrows "A" and "B" in FIG. 5. As each track engagement member 44 exits a distal end 66 and 68 of track 26, seat portions 14 and 16 are removed through an opening 72 (passenger side body opening not shown for simplicity) of vehicle body 12. In the preferred embodiment, each seat portion 14 and 16 includes a handle 70 along an outboard side for ease in handling the seat portion during removal and for carrying the seat portions following removal.

Reinstalling the seat portions into the vehicle can be accomplished by reversing the process described above. Further, while a single interconnecting assembly 30 was shown for each seat portion it is within the scope of the present invention to provide multiple interconnecting assemblies. For example, one interconnecting assembly could be located on an inboard corner of each seating portion with a second interconnecting assembly located on each outboard comer of the seat portion. Further, a lateral retention device can be incorporated in the interconnecting assembly or can be separate from the seating portion and attached to the vehicle body in proximity to track 26. The lateral retention device inhibits or prevents the seat portion from lateral movement within the track when engaged, and allows for movement of or removal of the seat portion when disengaged.

While the preferred embodiment is described as allowing the seats to be removed from openings located in the side of the vehicle, it is within the scope of the present invention to provide tracks extending longitudinally in the vehicle if an opening is provided at a front or rear end of the vehicle. One particular non-limiting example is if the present invention is incorporated in a van having an opening at the rear of the van.

The foregoing discussion discloses and describes a preferred embodiment of the present invention. One skilled in the art will readily recognize from such discussion, and from the accompanying drawings and claims, that various changes, modifications, and variations can be made therein without departing from the true spirit and fair scope of the invention as defined in the following claims.

## Claims

1. Vehicle seating structure allowing the removal of a seat through an opening (72) of a vehicle, comprising a track (26) located in the vehicle in coordination with said opening (72), wherein said seat includes an interconnection member (30) which is slidably engaged with said track (26), thereby allowing said seat to be displaced along said track (26) and pass through said opening (72) for removal,
**characterized in that** said track (26) is secured to a body (12) of the vehicle in coordination with said opening (72) on a surface of the vehicle, whereby the seat is an actual seat assembly (10) of the vehicle.

2. Vehicle seating structure according to claim 1,
**characterized in that** said opening (72) is located on a side of the vehicle.

3. Vehicle seating structure according to claim 1 or 2,
**characterized in that** said track (26) and said opening (72) are located on a rear surface of the vehicle.

4. Vehicle seating structure according to one of claims 1 to 3,
**characterized in that** said seat assembly (10) includes a generally horizonal seat cushion (18, 20) and a seat back (22, 24) which are pivotally coupled, and wherein said seat back (22, 24) may be folded over said cushion (18, 20).

5. Vehicle seating structure according to one of claims 1 to 4,
**characterized in that** said seat assembly (10) may be rotated upwardly and forwardly to a generally vertical position.

6. Vehicle seating structure according to one of claims 1 to 5,
**characterized in that** said interconnecting member (30) comprises a roller coupled to said track (26).

7. Vehicle seating structure according to one of claims 1 to 5,
**characterized in that** said interconnecting member (30) comprises a sliding block type member especially consisting of a self lubricating plastic.

8. Vehicle seating structure according to one of claims 1 to 7,
**characterized in that** said seat assembly (10) further includes a handle (70).

9. Vehicle seating structure according to one of claims 1 to 8,
**characterized in that** said seat assembly (10) further includes a 60/40 split bench seat comprising two seat portions (14, 16).

10. Vehicle seating structure according to one of claims 4 to 9,
**characterized in that** said interconnecting member (30) comprises a first segment (32) connected to a forward edge (34) of said seat cushion (20) and a second segment (36) connected to said first segment (32) about a hinge (38) wherein a distal end (42) of said second segment (36) operably connects with a track engagement member (44).

11. Vehicle seating structure according to one of claims 1 to 10,
**characterized in that** said track (26) is secured to the vehicle body (12) by a weld.

12. Vehicle seating structure according to one of claims 1 to 10,
**characterized in that** said track (26) is secured to the vehicle body (12) by bolts.

13. Vehicle seating structure according to one of claims 1 to 12,
**characterized in that** said track (26) is secured below the floor (28) of the vehicle with a coordinated slot or groove therein.

14. Vehicle seating structure according to one of claims 1 to 13,
**characterized by** a plurality of said interconnecting members (30).

## Patentansprüche

1. Fahrzeugsitzstruktur zur Ermöglichung der Entfernung eines Sitzes durch eine Öffnung (72) eines Fahrzeugs, aufweisend eine Schiene (26), die in dem Fahrzeug in Koordination mit der Öffnung (72) angeordnet ist, wobei der Sitz ein Verbindungselement (30) aufweist, das mit der Schiene (26) gleitend in Eingriff steht, wodurch der Sitz entlang der Schiene (26) verschoben und durch die Öffnung (72) zur Entfernung geführt werden kann, **dadurch gekennzeichnet, dass** die Schiene (26) an einer Karosserie (12) des Fahrzeugs in Koordination mit der Öffnung (72) auf der Oberfläche des Fahrzeugs festgelegt ist, wobei der Sitz ein tatsächlicher Sitzaufbau (10) des Fahrzeugs ist.

2. Fahrzeugsitzstruktur nach Anspruch 1, **dadurch gekennzeichnet, dass** die Öffnung (72) auf einer Seite des Fahrzeugs angeordnet ist.

3. Fahrzeugsitzstruktur nach Anspruch 1 oder 2, **dadurch gekennzeichnet, dass** die Schiene (26) und die Öffnung (72) auf einer Rückseite des Fahrzeugs angeordnet sind.

4. Fahrzeugsitzstruktur nach einem der Ansprüche 1 bis 3, **dadurch gekennzeichnet, dass** der Sitzaufbau (10) ein allgemein horizontales Sitzpolster (18, 20) und eine Sitzlehne (22, 24) aufweist, die schwenkbar verbunden sind, wobei die Sitzlehne (22, 24) über das Polster (18, 20) klappbar ist.

5. Fahrzeugsitzstruktur nach einem der Ansprüche 1 bis 4, **dadurch gekennzeichnet, dass** der Sitzaufbau (10) in Aufwärts- und Vorwärtsrichtung in eine allgemein vertikale Position drehbar ist.

6. Fahrzeugsitzstruktur nach einem der Ansprüche 1 bis 5, **dadurch gekennzeichnet, dass** das Verbindungselement (30) eine mit der Schiene (26) verbundene Rolle umfasst.

7. Fahrzeugsitzstruktur nach einem der Ansprüche 1 bis 5, **dadurch gekennzeichnet, dass** das Verbindungselement (30) ein Gleitblockelement aufweist, das insbesondere aus selbstschmierendem Kunststoff besteht.

8. Fahrzeugsitzstruktur nach einem der Ansprüche 1 bis 7, **dadurch gekennzeichnet, dass** der Sitzaufbau (10) außerdem einen Handgriff (70) umfasst.

9. Fahrzeugsitzstruktur nach einem der Ansprüche 1 bis 8, **dadurch gekennzeichnet, dass** der Sitzaufbau (20) eine 60-/40-geteilte Sitzbank mit zwei Sitzabschnitten (14, 16) aufweist.

10. Fahrzeugsitzstruktur nach einem der Ansprüche 4 bis 9, **dadurch gekennzeichnet, dass** das Verbindungselement (30) ein erstes Segment (32) aufweist, das mit einem Vorderrand (34) des Sitzpolsters (20) verbunden ist, und ein zweites Segment (36), das mit dem ersten Segment (32) über ein Gelenk (38) verbunden ist, wobei ein distales Ende (42) des zweiten Segments (36) mit dem Schieneneingriffelement (44) betriebsmäßig in Verbindung steht.

11. Fahrzeugsitzstruktur nach einem der Ansprüche 1 bis 10, **dadurch gekennzeichnet, dass** die Schiene (26) an der Fahrzeugkarosserie (12) durch eine Schweißverbindung befestigt ist.

12. Fahrzeugsitzstruktur nach einem der Ansprüche 1 bis 10, **dadurch gekennzeichnet, dass** die Schiene (26) an der Fahrzeugkarosserie (12) durch Bolzen bzw. Schrauben befestigt ist.

13. Fahrzeugsitzstruktur nach einem der Ansprüche 1 bis 12, **dadurch gekennzeichnet, dass** die Schiene (26) unter dem Boden (28) des Fahrzeugs mit einem koordinierten Schlitz bzw. einer koordinierten Nut festgelegt ist.

14. Fahrzeugsitzstruktur nach einem der Ansprüche 1 bis 13, **gekennzeichnet durch** mehrere Verbindungselemente (30).

## Revendications

1. Structure de places assises de véhicule, permettant de retirer un siège par l'intermédiaire d'une ouverture (72) d'un véhicule, comprenant un rail (26) situé dans le véhicule conjointement avec ladite ouverture (72), dans lequel ledit siège inclut un élément d'interconnexion (30) qui est mis en prise de manière coulissante avec ledit rail (26), ce qui permet audit siège de se déplacer le long dudit rail (26) et de passer au travers de ladite ouverture (72) pour être retiré, **caractérisée en ce que** ledit rail (26) est fixé à un élément de carrosserie (12) du véhicule en association avec ladite ouverture (72) prévue sur une surface du véhicule, le siège étant un ensemble de siège réel (10) du véhicule.

2. Structure de places assises de véhicule selon la revendication 1, **caractérisée en ce que** ladite ouverture (72) est située sur un côté du véhicule.

3. Structure de places assises de véhicule selon la revendication 1 ou 2, **caractérisée en ce que** ledit rail (26) et ladite ouverture (72) sont situés sur une surface arrière du véhicule.

4. Structure de places assises de véhicule selon l'une quelconque des revendications 1 à 3, **caractérisée en ce que** ledit ensemble de siège (10) inclut un coussin de siège (18 , 20) généralement horizontal et un dossier de siège (22, 24) qui sont couplés de manière pivotante, et dans laquelle chaque dossier de siège (22, 24) peut être replié sur ledit coussin (18, 20).

5. Structure de places assises de véhicule selon l'une quelconque des revendications 1 à 4, **caractérisée en ce que** ledit ensemble de siège (10) peut être tourné vers le haut et en avant pour venir dans une position généralement verticale.

6. Structure de places assises de véhicule selon l'une quelconque des revendications 1 à 5, **caractérisée en ce que** ledit élément d'interconnexion (30) comprend un rouleau couplé audit rail (26).

7. Structure de places assises de véhicule selon l'une quelconque des revendications 1 à 5, **caractérisée en ce que** ledit élément d'interconnexion (30) comprend un élément du type bloc coulissant constitué en particulier d'un plastique autolubrifiant.

8. Structure de places assises de véhicule selon l'une quelconque des revendications 1 à 7, **caractérisée en ce que** ledit ensemble de siège (10) inclut en outre une poignée (70) .

9. Structure de places assises de véhicule selon l'une quelconque des revendications 1 à 8, **caractérisée en ce que** ledit ensemble de siège (10) inclut en outre une banquette divisée 60 / 40 comprenant deux parties de siège (14, 16) .

10. Structure de places assises de véhicule. selon l'une quelconque des revendications 4 à 9, **caractérisée en ce que** ledit élément d'interconnexion (30) comprend un premier segment (32) raccordé à un bord avant (34) dudit coussin (20), et un deuxième segment (36) raccordé audit premier segment (32) au niveau d'une articulation (38), dans laquelle une extrémité distale (42) dudit deuxième segment (36) est raccordée de manière fonctionnelle à un élément de mise en prise avec le rail (44).

11. Structure de places assises de véhicule selon l'une quelconque des revendications 1 à 10, **caractérisée en ce que** ledit rail (26) est fixé à la carrosserie du véhicule (12) par une soudure.

12. Structure de places assises selon l'une quelconque des revendications 1 à 10, **caractérisée en ce que** ledit rail (26) est fixé à la carrosserie du véhicule (12) à l'aide de boulons.

13. Structure de places assises de véhicule selon l'une quelconque des revendications 1 à 12, **caractérisée en ce que** ledit rail (26) est fixé en dessous du plancher (28) du véhicule, avec une fente ou rainure correspondante ménagée dans celui-ci.

14. Structure de places assises de véhicule selon l'une quelconque des revendications 1 à 13, **caractérisée en ce qu'**elle comporte une pluralité d'éléments d'interconnexion (30).
